(19) Europäisches Patentamt
European Patent Office
Office européen des brevets

(11) **EP 1 255 134 B1**

(12) **EUROPEAN PATENT SPECIFICATION**

(45) Date of publication and mention
of the grant of the patent:
**29.12.2004 Bulletin 2004/53**

(51) Int Cl.⁷: **G02B 5/04**, G11B 7/135

(21) Application number: **02250219.9**

(22) Date of filing: **14.01.2002**

(54) **Reflection type compound prism and optical pickup apparatus employing the same**

Reflektierendes zusammengesetzes Prisma und optisches Aufnahmegerät mit diesem Prisma

Prisme composite du type réfléchissant et appareil de lecture optique utilisant ce prisme

(84) Designated Contracting States:
**DE FR GB NL**

(30) Priority: **30.04.2001 KR 2001023343**

(43) Date of publication of application:
**06.11.2002 Bulletin 2002/45**

(73) Proprietor: SAMSUNG ELECTRONICS CO., LTD.
**Suwon-City, Kyungki-do (KR)**

(72) Inventors:
• **Kim, Dae-sik**
**Paldal-gu, Suwon-si, Gyeonggi-do (KR)**
• **Jung, Seung-tae**
**Bundang-gu, Seongnam-si, Gyeonggi-do (KR)**
• **Yeon, Cheol-sung**
**Paldal-gu, Suwon-si, Gyeonggi-do (KR)**
• **Cho, Kun-ho**
**Gwonseon-gu, Suwon-si, Gyeonggi-do (KR)**

(74) Representative: **Brandon, Paul Laurence et al**
**APPLEYARD LEES,**
**15 Clare Road**
**Halifax HX1 2HY (GB)**

(56) References cited:
**EP-A- 0 399 650        DE-A- 1 772 275**
**US-A- 4 783 589        US-A- 4 804 835**
**US-A- 4 822 150        US-A- 5 200 946**
**US-A- 5 243 585        US-A- 5 517 480**
**US-A- 5 546 373        US-A- 5 751 482**
**US-B1- 6 198 574**

• **PATENT ABSTRACTS OF JAPAN vol. 015, no. 016 (P-1152), 14 January 1991 (1991-01-14) & JP 02 260143 A (ALPS ELECTRIC CO LTD), 22 October 1990 (1990-10-22)**
• **PATENT ABSTRACTS OF JAPAN vol. 014, no. 465 (P-1114), 9 October 1990 (1990-10-09) & JP 02 185726 A (ALPS ELECTRIC CO LTD), 20 July 1990 (1990-07-20)**

EP 1 255 134 B1

## Description

The present invention relates to reflection type compound prisms which can reduce the height of an optical system, and a thin optical pickup apparatus employing the same.

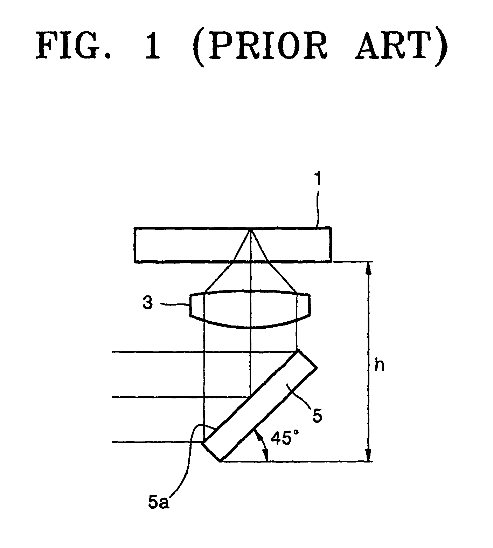

Referring to Figure 1, a conventional optical pickup apparatus has an optical system in which a light beam emitted from a light source (not shown) proceeds horizontally, is reflected by a reflection mirror 5 having a reflection surface 5a inclined by 45°, proceeds in a direction of a height h, and is condensed by an objective lens 3 to be focused on an optical disc 1.

The recording density is determined by the size of a light spot formed by the objective lens 3 on a recording surface of the optical disc 1. The size of a light spot decreases as the wavelength of light used becomes shorter and an NA (numerical aperture) number of the objective lens 3 becomes greater. Assuming that the effective pupil diameter (EPD) and effective focal length (EFL) of a light beam input to the objective lens 3 are EPD and EFL, respectively, and an incident angle of a light beam focused on the recording surface of the optical disc 1 is θ, NA=sinθ and θ=arctan{EPD/(2EFL)}. Thus, in order to maximize an effective NA number to minimize the size of a light spot under the above given circumstances, the light beam incident on the objective lens 3 should have a diameter corresponding to the effective diameter of the objective lens 3.

The thickness, in particular, the thickness in the direction of the height h, of the conventional optical pickup apparatus having the optical structure as shown in Figure 1 is determined by the diameter of a light beam input to the objective lens 3, the thickness of the objective lens 3, the thickness in the direction of the height of an actuator (not shown) for driving the objective lens 3, the size of the reflection mirror 5, and an angle between the reflection mirror 5 and a horizontal plane which is perpendicular to the direction of height.

However, in the conventional optical pickup apparatus having the above structure, to increase the size of a light beam input to the objective lens 3 so as to obtain a desired NA number, the reflection mirror 5 must be made larger. Thus, it is difficult to manufacture a compact/thin optical pickup apparatus.

EP 0 399650 (Hewlett-Packard) discloses an optical assembly incorporating a wedge-shaped prism, an isosceles prism, a rhomboidal prism, a second isosceles prism and two plano-convex lenses. Each optical component is cemented to its adjacent component to form an integral unit.

To address the above-described problems, it is an aim of preferred embodiments of the present invention to provide a reflection type compound prism which can reduce the height of an optical system, and a thin optical pickup apparatus employing the same.

According to the present invention in a first aspect, there is provided a reflection type compound prism comprising a plurality of prisms, comprising a first prism and a second prism, wherein: the first prism includes a first transmission surface and a first reflection surface which are each inclined with respect to a first horizontal plane, such that a light beam of a given diameter proceeding along a horizontal plane parallel to the first horizontal plane and incident to the first transmission surface is reflected by the first reflection surface such that the reflected light beam is inclined with respect to and transmitted toward the first horizontal plane; and the second prism includes second, third and fourth reflection surfaces, the compound prism being characterised in that the second reflection surface is arranged to lie in the first horizontal plane and the third reflection surface is arranged to be parallel to the second reflection surface and spaced apart from it in a predetermined direction by a distance close to the given diameter and in that the fourth reflection surface forms an angle of less than 45 degrees with respect to the first horizontal plane, the second prism being arranged with respect to the first prism to receive the light beam of given diameter reflected by the first reflection surface, such that the light beam is reflected in order by the second, third and fourth reflection surfaces to finally transmit the light beam in the predetermined direction.

It is preferred in the present invention that the fourth reflection surface of the second prism forms an angle of 20° through 40° with respect to the horizontal plane.

It is preferred in the present invention that the second and third reflection surfaces of the second prism are parallel to each other.

It is preferred in the present invention that the second prism is a rhomboid prism in which the second through fourth reflection surfaces and a surface facing the fourth reflection surface form a rhomboidal structure.

It is preferred in the present invention that a third prism is provided between the first and second prisms to make a light beam reflected by the first reflection surface of the first prism proceed straight to the second prism.

It is preferred in the present invention that the third prism is a triangle prism having a right triangle structure.

It is preferred in the present invention that the first prism is a triangle prism having an isosceles triangle structure arranged to be included by a predetermined angle with respect to the horizontal plane.

It is preferred in the present invention that the first and second prisms are formed and arranged so that total internal reflection of an incident light beam occurs at the first through third reflection surfaces, and more substantially that the fourth reflection surface of the second prism is a total reflection surface.

There is preferably further provided an optical pickup apparatus, including the reflection type compound prism of any of the preceding claims and further comprising a light source, an objective lens for forming a light spot on a recording surface of a recording medium by condensing an incident light beam emitted from the light source and an actuator for driving the objective lens in focus and/or track directions, wherein the reflection type compound prism is arranged to receive the incident light beam emitted in a horizontal direction from the light source and to transmit the light beam vertically in the predetermined direction to the objective lens.

Preferably, the second and third reflection surfaces are spaced apart from one another in the predetermined direction by less than the diameter of the incident light beam. 11. The optical pickup apparatus of claim 9 or 10, wherein there is further provided a photodetector for receiving a light beam reflected by the recording medium and sequentially passing through the objective lens and the reflection type compound prism and photoelectrically converting the received light beam.

Preferably, the recording medium has a structure in which data is recorded on and/or reproduced from the recording medium in a first reflection surface recording method.

Preferably, at least a portion of the objective lens is disposed at a position lower than a light beam emitted from the light source and incident on the reflection type compound prism.

An apparatus may be provided which further comprises an optical path changer for changing a proceeding path of a light beam, provided on an optical path between the light source and the reflection type compound prism.

Preferably, the optical path changer comprises: a polarizing beam splitter for transmitting and reflecting an incident light beam according to polarization of the incident light beam; and a wave plate for changing polarization of the incident light beam.

Preferably, the optical path changer is a hologram element for selectively transmitting or diffracting and transmitting an incident light beam according to a direction of incidence, and the light source, the hologram element, and a photodetector are optically modularized.

The present invention will become more apparent by describing in detail preferred embodiments thereof, by way of example only, with reference to the attached drawings in which:

Figure 1 is a view showing major portions of a conventional optical pickup apparatus;

Figure 2 is a perspective view of a reflection type compound prism according to a preferred embodiment of the present invention;

Figure 3 is a view showing an example of conditions on angles in the reflection type compound prism according to the present invention;

Figure 4 is a perspective view of an optical pickup apparatus employing the reflection type compound prism according to a preferred embodiment of the present invention;

Figure 5 is a view showing major portions of the optical pickup apparatus shown in Figure 4;

Figure 6 is a perspective view of an optical pickup apparatus employing the reflection type compound prism according to another preferred embodiment of the present invention; and

Figure 7 is a view of an example of an optical module employed in the optical pickup apparatus of Figure 6.

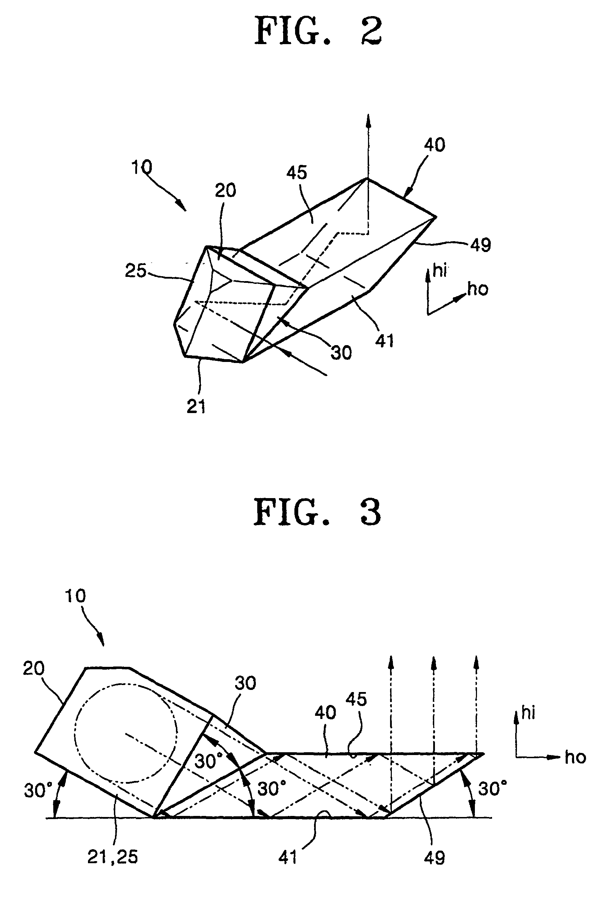

Referring to Figure 2, a reflection type compound prism 10 according to the present invention includes first and second prisms 20 and 40. A light beam output from a light source (not shown) substantially parallel to a horizontal plane, which is perpendicular to a direction of height hi of an optical system, is input to the first prism 20. The size of the light beam with respect to the direction of height hi is reduced by using the difference in an angle between surfaces of the first and second prisms 20 and 40. Then, the light beam is reflected by the surface of the second prism 40 forming an angle less than 45° with respect to the horizontal plane, and is output in the direction of height hi.

Referring briefly to Figure 3, the line at the base of the Figure defining the location of a particular horizontal plane and from which various angles are defined, is hereinafter referred to as the "first horizontal plane" for ease of reference.

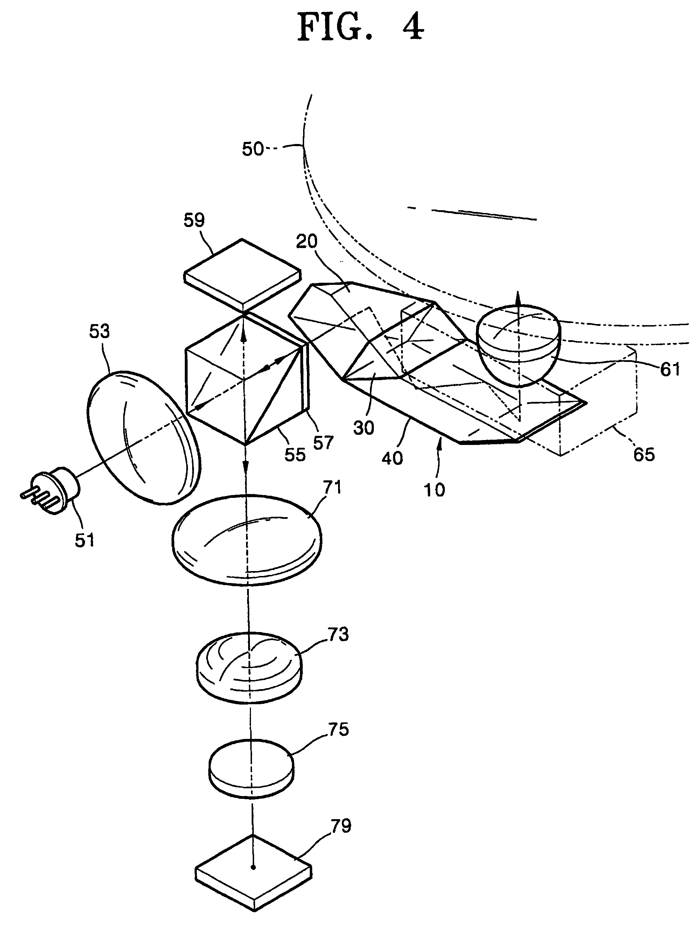

Here, considering an example in which the reflection type compound prism 10 according to this embodiment of the present invention is adopted in an optical pickup apparatus, the direction of height hi of an optical system is assumed to indicate a direction along an optical axis of an objective lens 61 (see Figure 4). Of course, the meaning of the direction of height hi may be different according to an optical system where the reflection type compound prism 10 according to preferred embodiments of the present invention is adopted. In Figure 2, "ho" denotes the first horizontal plane or a predetermined direction parallel to the horizontal plane.

The first prism 20 has a first transmission surface 21 and a first reflection surface 25 which reflects a light beam input through the first transmission surface 21 to be inclined downward with respect to the first horizontal plane. The first prism 20 is preferably a triangle prism having an isosceles triangle structure. That is, the first prism 20 redirects the light beam by using its three side surfaces - the first transmission surface 21, the first reflection surface 25, and a surface facing the second prism 40. The three side surfaces preferably form an isosceles triangle structure.

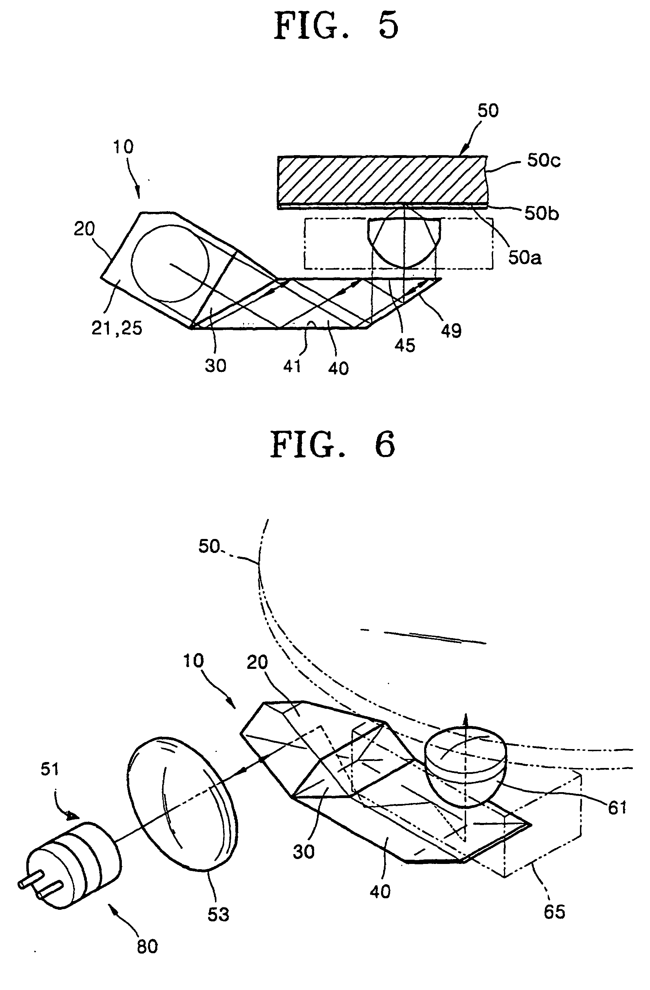

Preferably, a light beam from a light source 51 (see Figure 6) is perpendicularly incident on the first transmission surface 21. Preferably, the first reflection surface 25 totally reflects the light beam perpendicularly incident through the first transmission surface 21.

When a refractive index n1 of material of the first prism 20 is 1.5 and a refractive index n2 of the outside of the first prism, that is, a refractive index of air, is 1, a critical incident angle θ at which total internal reflection occurs at the first reflection surface is 41.8°, which is obtained by using Equation 1.

[Equation 1]

$$\sin \theta = \frac{n2}{n1}$$

Thus, when the first prism 20, for example, is formed to have an isosceles right triangle structure, the angle at which a light beam perpendicularly transmitted through the first transmission surface 21 is incident on the first reflection surface 25 is 45°, so that the light beam is totally internally reflected by the first reflection surface 25.

As shown in Figure 2, when the first prism 20 is formed to be a triangle prism having an isosceles triangle structure, the first prism 20 is preferably arranged to be inclined a predetermined angle with respect to the first horizontal plane so that the light beam totally internally reflected by the first reflection surface 25 can be input to the second prism 40 at an angle meeting the condition for total internal reflection.

The second prism 40 includes a second reflection surface 41 which lies in the first horizontal plane and which totally internally upwardly reflects a light beam input into the second prism 40 after being downwardly reflected by the first reflection surface 25, a third reflection surface 45 which is arranged above the second reflection surface 41 in the direction of height hi totally internally reflects a light beam passing the second reflection surface 41, and simultaneously is disposed at a position at which the size of the light beam in the direction of height hi is reduced, and a fourth reflection surface 49 which reflects the light beam input by being reflected by the third reflection surface 45 in the direction of height hi.

The distance between the second and third reflection surfaces 41 and 45 arranged to face each other is smaller than the diameter of the light beam incident on the first transmission surface 21 of the first prism 20. By reducing the distance between the second and third reflection surfaces 41 and 45, the size of the light beam in the direction of height hi is reduced so that waveguiding parallel to the horizontal plane is possible. The fourth reflection surface 49 preferably forms an angle less than 45° with respect to the first horizontal plane, preferably, 30±10°, (that is, within a range of 20° through 40°). Also, since the incident angle of the light beam incident on the fourth reflection surface 49 from the third reflection surface 45 does not meet the condition for total internal reflection due to the structure of the second prism 40, the fourth reflection surface 49 is preferably coated to be a reflective surface, preferably, a totally reflective surface.

In the present preferred embodiment, the second prism 40 is preferably a rhomboid prism in which the second through fourth reflection surfaces 41, 45, and 49, and a surface facing the fourth reflection surface 49 form a rhomboidal structure. Also, the first and second prisms 20 and 40 are preferably arranged and formed such that a light beam passing the first prism 20 and incident on the second reflection surface 41 of the second prism 40 is totally internally reflected and the light beam is also totally internally reflected at the third reflection surface 45.

Preferably, a third prism 30 is further provided between the first and second prisms 20 and 40 so that a light beam downwardly reflected by the first reflection surface 25 of the first prism 20 proceeds straight to be input to the second prism 40. Here, the third prism 30 may be a triangle prism having a right triangle structure.

As shown in Figure 3, the first prism 20 forms an angle of 30° with respect to the first horizontal plane. The first and second prisms 20 and 40 are arranged to form an angle of 30° therebetween. The third prism 30 is a triangle prism having a right triangle structure fit for the gap between the first and second prisms 20 and 40. The fourth reflection surface 49 of the second prism 40 is formed at an angle of 30° with respect to the horizontal plane. In this case, since the first reflection surface 25 is inclined at an angle of 45° with respect to a light beam perpendicularly input to the first transmission surface 21 of the first prism 20, the light beam input to the first reflection surface 25 from the first transmission surface 21 is totally internally reflected and proceeds straight to be input to the second prism 40. The light beam entering the second prism 40 is inclined by 30° with respect to the second reflection surface 41, that is, at an incident angle of 60°. Thus, the incident light beam is totally internally reflected by the second reflection surface 41 to proceed toward the third reflection surface 45. The light beam is then incident on the third reflection surface 45 at an incident angle of 60° and is totally internally reflected to proceed toward the fourth reflection surface 49. Then, the light beam is incident on the fourth reflection surface 49 at an incident angle of 30° and is reflected in the direction of height hi.

When the reflection type compound prism 10 meets the conditions on angles as shown in Figure 3, a change in the diameter of a light beam in the reflection type compound prism 10 is as follows. For example, when the original diameter of a light beam input to the first transmission surface 21 is 3.2 mm, the diameter of the light beam incident on the second reflection surface 41 of the second prism 40 is double (6.2 mm) and the light beam is totally internally reflected. The light beam is then totally internally reflected from the third reflection surface 45 which is parallel to the second reflection surface 41, under the same conditions, and is then incident on the fourth reflection surface 49. Since the fourth reflection surface 49 is inclined by 30° with respect to the horizontal plane, the light beam is incident on the fourth reflection surface 49 at an incident angle of 30°. Accordingly, when reflected by the fourth reflection surface 49, the light beam regains its original diameter of 3.2 mm and proceeds in the direction of height hi.

That is, the reflection type compound prism 10 according to preferred embodiments of the present invention can be formed such that the size of an exit light beam is not reduced with respect to an input light beam.

Also, in the reflection type compound prism 10 according to this embodiment of the present invention, a light beam is incident on the second reflection surface 41 of the second prism 40 at an incident angle of 60°, which meets a condition for total reflection. Thus, by forming the distance between the second and third reflection surfaces 41 and 45 to be less than the diameter of the original light beam incident on the first transmission surface 21 of the first prism 20, and by forming the widths of the second and third reflection surfaces 41 and 45 such that the light beam incident on the second prism 40 from the first prism 20 can be incident on the fourth reflection surface 49 after being sequentially totally reflected by the second and third reflection surfaces 41 and 45, the light beam can propagate parallel to the horizontal plane while the size of the light beam is reduced with respect to the direction of the height hi.

Thus, the reflection type compound prism 10 according to preferred embodiments of the present invention can reduce the height of an optical system. Also, a preferred embodiment of the reflection type compound prism 10 of the present invention is described with reference to Figures 2 and 3, but it should be understood that various modifications are possible within the scope of the technical concept of the present invention.

Preferred embodiments of an optical pickup apparatus adopting the reflection type compound prism 10 according to the present invention to form a thin optical system, will now be described.

Figures 4 through 6 show optical pickup apparatus according to preferred embodiments of the present invention which are applied to a recording medium 50 for recording/reproducing information signals in a first reflection surface recording method. These embodiments are mere exemplary and the optical pickup apparatus according to the present invention is not limited to the first reflection surface recording method. Here, the first reflection surface recording method is applied to the recording medium 50 having no typical protective layer. A light beam from the optical pickup apparatus is incident on a recording surface 50a formed on a substrate 50c or a protective film 50b having a thickness of several μm, for example, 5 μm, formed on the recording surface 50a to protect the recording surface 50a from dust or scratches. The operational distance of an objective lens 61 can be made to be as short as the thickness of a typical protective layer, for example, a 0.6 mm thick substrate in a DVD, so that a thin optical pickup apparatus can be formed.

Referring to Figures 4 and 5, the optical pickup apparatus according to a preferred embodiment of the present invention includes a light source 51, an objective lens 61 for condensing an incident light beam emitted from the light source 51 and forming a light spot on the recording surface 50a of the recording medium 50, an actuator 65 for driving the objective lens 61 in a focus and/or track direction, the reflection type compound prism 10, and a photodetector 79 for receiving a light beam reflected by the recording medium 50 and sequentially passing through the objective lens 61 and the reflection type compound prism 10 to detect an information signal and/or an error signal and for performing photoelectric conversion with respect to the received light beam.

Preferably, an edge emitting laser or a vertical cavity surface emitting semiconductor laser for emitting a light beam having a wavelength of 650 nm or less is used as the light source 51.

The objective lens 61 preferably has an NA number of 0.6 or more and a working distance which is as short as possible so that a thin optical pickup apparatus can be formed. The objective lens 61 is controlled by the actuator 65 in the focusing and tracking directions. Since the basic structure of the actuator 65 is well known in the field to which the present invention pertains, a detailed explanation thereof will be omitted herein.

The first, second and/or third prisms 20, 40, and/or 30 of the reflection type compound prism 10 is/are preferably optimized such that the size of a light beam output from the reflection type compound prism 10 can be the same as or greater than that of the light beam emitted from the light source 51 and input to the reflection type compound prism 10, while simultaneously minimizing the thickness of the optical pickup apparatus.

For this purpose, the reflection type compound prism 10 has the structure described above with reference to Figures 2 and 3 and is arranged such that, when the light beam output from the light source 51 proceeds through the second prism located at a lower end portion of the actuator 65, its size is reduced in the direction of height hi by using a difference in angle between surfaces of the first and second prisms 20 and 40, and then the light beam is reflected to proceed toward the objective lens 61 disposed in the direction of height hi.

That is, the reflection type compound prism 10 has a structure in which an incident light beam is guided by reducing the size of the light beam in the direction of height hi between the second and third reflection surfaces 41 and 45 of the second prism 40. In view of the direction of height hi, the first prism 20 of the reflection type compound prism 10 protrudes above the second prism 40. Thus, to form a thinner optical pickup apparatus, the reflection type compound prism 10 is preferably arranged such that only the second prism 40, in particular, a portion corresponding to the third reflection surface 45 of the second prism 40, can be positioned just under the lower end portion of the actuator 65. Also, the actuator 65 is preferably formed so that the above arrangement can be possible. When the second prism 40 is arranged as above, the effective thickness of the reflection type compound prism 10 affecting the thickness of the optical pickup apparatus is substantially the distance between the second and third reflection surfaces 41 and 45.

Here, considering that, preferably, the size of a light beam output from the reflection type compound prism 10 toward the objective lens 61 is substantially the same as or greater than that of the light beam incident on the reflection type compound prism 10, the thickness of the second prism 40 of the optimal reflection type compound prism 10 depends on an angle formed between the fourth reflection surface 49 and the horizontal plane. Thus, the thickness of the optical pickup apparatus in the direction of height hi can be reduced as much as the angle formed between the fourth reflection surface 49 and the horizontal plane can be decreased. As described above, when the reflection type compound prism 10 is formed as shown in Figure 2, the angle of the fourth reflection surface 49 with respect to the horizontal plane can be adjusted to 30±10°.

When the reflection type compound prism 10 is adopted, a light beam having a relatively large diameter emitted from the light source 51 toward the reflection type compound prism 10 can pass under the actuator 65 in a height lower than the top of the diameter of the light beam. The original diameter of the light beam is restored when the light beam is reflected by the fourth reflection surface 49 of the second prism 40.

The optical pickup apparatus according to this embodiment of the present invention further includes an optical path changer for changing a proceeding path of a light beam on an optical path between the light source 51 and the reflection type compound prism 10. The optical path changer, as shown in Figure 4, includes a polarizing beam splitter 55 for transmitting and reflecting an incident light beam according to a polarization component thereof, and a wave plate 57 for changing the polarization of the incident light beam. The wave plate 57 is preferably a quarter wave plate with respect to the wavelength of the light beam emitted from the light source 51. The optical path changer may include a beam splitter for transmitting and reflecting a light beam in a predetermined ratio.

The optical pickup apparatus according to an embodiment of the present invention further includes a collimating lens 53 for converging a divergent light beam emitted from the light source 51 into a parallel light beam on the optical path between the light source 51 and the reflection type compound prism 10. When the collimating lens 53 and the beam splitter type optical path changer are included, as shown in Figure 4, a condensing lens 71 for focusing a light beam proceeding toward the photodetector 79 which is reflected by the recording medium 50 and sequentially passes through the objective lens 61, the reflection type compound prism 10, and the optical path changer, is further provided on the optical path between the optical path changer and the photodetector 79. Also, to detect a focus error signal in an astigmatism method, an astigmatism lens unit including a cylindrical lens 73 for generating astigmatism a yoke lens 75 for slightly diverging an incident light beam, may be further provided on the optical path between the optical path changer and the photodetector 79.

In Figure 4, reference numeral 59 denotes a monitoring photodetector for monitoring a quantity of light emitted from the light source 51.

The propagation of a light beam emitted from the light source 51 through the optical pickup apparatus according to a preferred embodiment of the present invention will now be described with reference to Figures 4 and 5.

First, a light beam having a predetermined diameter emitted from the light source 51 and passing the collimating lens 53 and the optical path changer is perpendicularly incident on the first transmission surface 21 of the first prism 20 of the reflection type compound prism 10. The light beam is totally internally reflected by the first reflection surface 25 of the first prism 20 to proceed at a downward angle with respect to the horizontal plane, and is incident on the second reflection surface 41 of the second prism 40 at an angle satisfying the condition for total internal reflection.

The light beam is totally internally reflected by the second reflection surface 41 and simultaneously the diameter of the light beam is enlarged. Then, the light beam is totally internally reflected by the third reflection surface 45 of the second prism 40 lower than the top of the diameter of the light beam incident on the first transmission surface 21 and proceeds toward the fourth reflection surface 49 of the second prism 40 which is coated to produce total reflection. As a light beam is guided from the first prism toward the second prism 40 in a direction parallel to the horizontal plane, until the light beam meets the fourth reflection surface 49, the diameter of the light beam increases due to the geometric structure of the second prism 40 and the mutual arrangement of the first and second prisms 20 and 40, while the size of the passage through which the light beam propagates in the direction of height hi, decreases. The diameter of the light beam incident on the fourth reflection surface 49 forming an angle less than 45° with respect to the horizontal plane is restored to its original size or becomes greater than the original diameter and the light beam is reflected toward the objective lens 61.

The light beam incident on the objective lens 61 is focused by the objective lens 61 to form a light spot on the recording surface 50a of the recording medium 50. The light beam is reflected by the recording surface 50a and passes back through the objective lens 61 and the reflection type compound prism 10, is incident on the optical path changer, and is reflected by the polarizing beam splitter 55 of the optical path changer. The reflected light beam is received by the photodetector 79 after passing through the condensing lens 71 and astigmatism lenses 73 and 75.

Although the optical pickup apparatus according to the above preferred embodiment of the present invention is described with reference to Figures 4 and 5 to include the prism type optical path changer and the reflection type compound prism 10 having a structure so that an incident light beam is totally internally reflected by the first reflection surface 25 of the first prism 20, the prism type optical path changer can be omitted by forming the reflection type compound prism 10 such that an incident light beam can be transmitted and reflected by the first reflection surface 25 and by arranging the photodetector 79 and/or the monitoring photodetector 59 to detect the light beam passing through the first reflection surface 25.

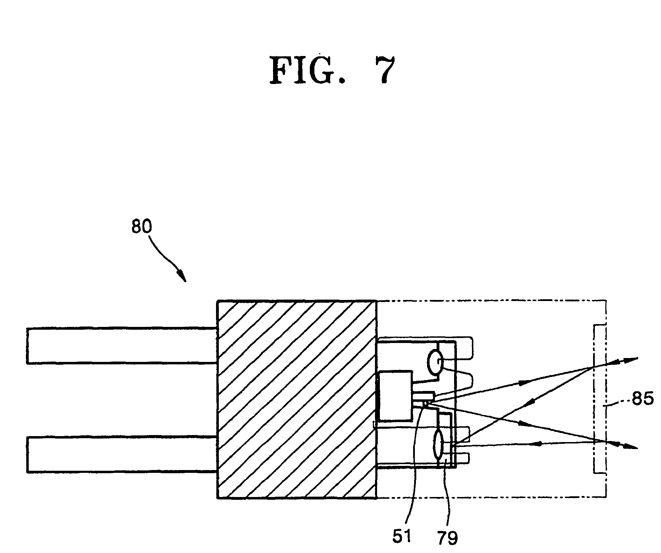

In the optical pickup apparatus according to another preferred embodiment of the present invention, a hologram element 85 can be used instead of the beam splitter type optical path changer. When the hologram element 85 is adopted as the optical path changer, as shown in Figures 6 and 7, an optical module 80 includes the light source 51, the hologram element 85, and a photodetector 79. Here, the hologram element 85 is formed to be capable of selectively transmitting or diffracting and transmitting light according to the direction from which a light beam is incident. For example, as shown in Figure 7, the hologram element 85 transmits an incident light beam emitted from the light source 51 and diffracts and transmits an incident light beam reflected by the recording medium 50 so as to proceed toward the photodetector 79 arranged at one side of the light source 51. Since the light module 80 shown in Figure 7 is well known in the field to which the present invention pertains, a detailed description thereof will be omitted.

When the optical pickup apparatus according to preferred embodiments of the present invention adopts the optical module 80 as shown in Figure 7, miniaturization of the optical pickup apparatus is more possible than in the optical pickup apparatus having the optical structure shown in Figure 4.

As described above, in the reflection type compound prism according to preferred embodiments of the present invention, a light beam emitted from the light source is guided, the size of the light beam according to the direction of the height is reduced, and the light beam is reflected by a surface forming an angle less than 45° with respect to the horizontal plane, so that the height of an optical system can be reduced without reduction of the size of the light beam. Thus, when the reflection type complex is adopted, a light beam having a relatively large diameter incident on the reflection type compound prism from the light source passes under the actuator in a height lower than the top of the diameter of the light beam, and is reflected by the fourth reflection surface of the second prism so that the original diameter of the light beam is restored. Therefore, a small and thin optical pickup apparatus having a desired NA number is obtained.

## Claims

1. A reflection type compound prism (10) comprising a plurality of prisms (20, 30, 40), comprising a first prism (20) and a second prism (40), wherein:

   the first prism (20) includes a first transmission surface (21) and a first reflection surface (25) which are each inclined with respect to a first horizontal plane , such that a light beam of a given diameter proceeding along a horizontal plane parallel to the first horizontal plane and perpendicularly incident to the first transmission surface(21) is reflected by the first reflection surface (25) such that the reflected light beam is inclined with respect to and transmitted toward the first horizontal plane; and

   the second prism (40) includes second (41), third (45) and fourth (49) reflection surfaces, the compound prism being **characterised in that** the second reflection surface (41) is arranged to lie in the first horizontal plane and the third reflection surface (45) is arranged to be parallel to the second reflection surface (41) and spaced apart from it in a predetermined direction by a distance less than the given diameter and **in that** the fourth reflection surface (49) forms an angle of less than 45 degrees with respect to the first horizontal plane, the second prism (40) being arranged with respect to the first prism (20) to receive the light beam of given diameter reflected by the first reflection surface (25), such that the light beam is reflected in order by the second (41), third (45) and fourth (49) reflection surfaces to finally transmit the light beam in the predetermined direction.

2. A reflection type compound prism (10) as claimed in claim 1, wherein the fourth reflection surface (49) of the second prism (40) forms an angle of 20° through 40° with respect to the first horizontal plane.

3. A reflection type compound prism as claimed in claim 1 or 2, wherein the second prism (40) is a rhomboid prism in which the second through fourth reflection surfaces (41 45, 49) and a surface facing the fourth reflection surface (49) form a rhomboidal structure.

**4.** A reflection type compound prism (10) as claimed in claim 1, 2 or 3, wherein a third prism (30) is provided between the first (20) and second (40) prisms to make a light beam reflected by the first reflection surface (25) of the first prism (20) proceed straight to the second prism (40).

**5.** A reflection type compound prism (10) as claimed in claim 4, wherein the third prism (30) is a triangle prism having a right triangle structure.

**6.** A reflection type compound prism (10) as claimed in claim any of claims 1 through 5, wherein the first prism (10) is a triangle prism having an isosceles triangle structure arranged to be inclined by a predetermined angle with respect to the first horizontal plane.

**7.** A reflection type compound prism (10) as claimed in any of claims 1 through 6, wherein the first (20) and second prisms (40) are formed and arranged so that total internal reflection of an incident light beam occurs at the first through third reflection surfaces (25, 41, 45).

**8.** A reflection type compound prism as claimed in any of the preceding claims, wherein the fourth reflection surface (49) of the second prism (40) is a total reflection surface.

**9.** An optical pickup apparatus, including the reflection 'type compound prism of any of the preceding claims and further comprising a light source (51), an objective lens (61) for forming a light spot on a recording surface (50a) of a recording medium (50) by condensing an incident light beam emitted from the light source (51) and an actuator (65) for driving the objective lens (61) in focus and/or track directions, wherein the reflection type compound prism (10) is arranged to receive the incident light beam emitted in a horizontal direction from the light source (51) and to transmit the light beam vertically in the predetermined direction to the objective lens (61).

**10.** The optical pickup apparatus of claim 9, wherein the second (41) and third (45) reflection surfaces are spaced apart from one another in the predetermined direction by less than the diameter of the incident light beam.

**11.** The optical pickup apparatus of claim 9 or 10, wherein there is further provided a photodetector (79) for receiving a light beam reflected by the recording medium (50) and sequentially passing through the objective lens (61) and the reflection type compound prism (10) and photoelectrically converting the received light beam.

**12.** An apparatus as claimed in any of claims 9 through 11, wherein the recording medium (50) has a structure in which data is recorded on and/or reproduced from the recording medium (50) in a first reflection surface (25) recording method.

**13.** An apparatus as claimed in any of claims 9 through 12, wherein at least a portion of the objective lens (61) is disposed at a position lower than a light beam emitted from the light source (51) and incident on the reflection type compound prism (10).

**14.** An apparatus as claimed in any of claims 9 through 13, further comprising an optical path changer for changing a proceeding path of a light beam, provided on an optical path between the light source (51) and the reflection type compound prism (10).

**15.** An apparatus as claimed in claim 14, wherein the optical path changer comprises:

a polarizing beam splitter (55) for transmitting and reflecting an incident light beam according to polarization of the incident light beam; and

a wave plate (57) for changing polarization of the incident light beam.

**16.** An apparatus as claimed in claim 14, wherein the optical path changer is a hologram element (85) for selectively transmitting or diffracting and transmitting an incident light beam according to a direction of incidence, and the light source (51), the hologram element (85), and a photodetector (79) are optically modularized.

**Patentansprüche**

**1.** Zusammengesetztes Reflektionsprisma (10), das eine Vielzahl von Prismen (20, 30, 40) umfasst, die ein erstes Prisma (20) und ein zweites Prisma (40) umfasst, wobei:

das erste Prisma (20) eine erste Durchlassfläche (21) und eine erste Reflektionsfläche (25) enthält, die in Bezug auf eine erste horizontale Ebene jeweils so geneigt sind, dass ein Lichtstrahl eines bestimmten Durchmessers, der sich entlang einer horizontalen Ebene parallel zu der ersten horizontalen Ebene ausbreitet und senkrecht auf die erste Durchlassfläche (21) auftrifft, von der ersten Reflektionsfläche (25) so reflektiert wird, dass der reflektierte Lichtstrahl in Bezug auf die erste horizontale Ebene geneigt wird und in ihre Richtung durchgelassen wird; und

das zweite Prisma (40) eine zweite (41), eine dritte (45) und eine vierte (49) Reflektionsfläche enthält, wobei das zusammengesetzte Prisma **dadurch gekennzeichnet ist, dass** die zweite Reflektionsfläche (41) so angeordnet ist, dass sie in der ersten horizontalen Ebene liegt, und die dritte Reflektionsfläche (45) so angeordnet ist, dass sie parallel zu der zweiten Reflektionsfläche (41) ist und davon in einer vorgegebenen Richtung um eine Strecke beabstandet ist, die kürzer ist als der bestimmte Durchmesser, und dass die vierte Reflektionsfläche (49) einen Winkel von weniger als 45° in Bezug auf die erste horizontale Ebene bildet, wobei das zweite Prisma (40) in Bezug auf das erste Prisma (20) so angeordnet ist, dass es den Lichtstrahl des bestimmten Durchmessers, der von der ersten Reflektionsfläche (25) reflektiert wird, so empfängt, dass der Lichtstrahl der Reihe nach von der zweiten (41), der dritten (45) und der vierten (49) Reftektionsfläche reflektiert wird und der Lichtstrahl schließlich in der vorgegebenen Richtung durchgelassen wird.

2. Zusammengesetztes Reflektionsprisma (10) nach Anspruch 1, wobei die vierte Reflektionsfläche (49) des zweiten Prismas (40) einen Winkel von 20° bis 40° in Bezug auf die erste horizontale Ebene bildet.

3. Zusammengesetztes Reflektionsprisma nach Anspruch 1 oder 2, wobei das zweite Prisma (40) ein Rhomboid-Prisma ist, bei dem die zweite bis vierte Reflektionsfläche (41, 45, 49) und eine Fläche, die der vierten Reflektionsfläche (49) zugewandt ist, eine Rhomboid-Struktur bilden.

4. Zusammengesetztes Reflektionsprisma (10) nach Anspruch 1, 2 oder 3, wobei ein drittes Prisma (30) zwischen dem ersten (20) und dem zweiten (40) Prisma vorhanden ist, so dass sich ein Lichtstrahl, der von der ersten Reflektionsfläche (25) des ersten Prismas (20) reflektiert wird, direkt zu dem zweiten Prisma (40) ausbreitet.

5. Zusammengesetztes Reflektionsprisma (10) nach Anspruch 4, wobei das dritte Prisma (30) ein Dreieckprisma ist, das die Struktur eines rechtwinkligen Dreiecks hat.

6. Zusammengesetztes Reflektionsprisma (10) nach einem der Ansprüche 1 bis 5, wobei das erste Prisma (10) ein Dreieckprisma ist, das die Struktur eines gleichschenkligen Dreiecks hat, das so angeordnet ist, dass es um einen vorgegebenen Winkel in Bezug auf die erste horizontale Ebene geneigt ist,

7. Zusammengesetztes Reflektionsprisma (10) nach einem der Ansprüche 1 bis 6, wobei das erste (20) und das zweite Prisma (40) so ausgebildet und angeordnet sind, dass totale innere Reflektion eines auftreffenden Lichtstrahls an der ersten bis dritten Reflektionsfläche (25, 41, 45) auftritt.

8. Zusammengesetztes Reflektionsprisma nach einem der vorangehenden Ansprüche, wobei die vierte Reflektionsfläche (49) des zweiten Prismas (40) eine Fläche totaler Reflektion ist.

9. Optische Abnehmervorrichtung, die das zusammengesetzte Reflektionsprisma nach einem der vorangehenden Ansprüche enthält und des Weiteren eine Lichtquelle (51), eine Objektivlinse (61), die einen Lichtstrahl auf einer Aufzeichnungsfläche (50a) eines Aufzeichnungsmediums (50) durch Bündeln eines auftreffenden Lichtstrahls, der von der Lichtquelle (51) emittiert wird, ausbildet, und ein Stellglied (65) umfasst, das die Objektivlinse (61) in Fokus-und/oder Spurrichtung steuert, wobei das zusammengesetzte Reflektionsprisma (10) so eingerichtet ist, dass es den in einer horizontalen Richtung von der Lichtquelle (51) emittierten auftreffenden Lichtstrahl empfängt und den Lichtstrahl vertikal in der vorgegebenen Richtung zu der Objektivlinse (61) durchlässt.

10. Optische Abnehmervorrichtung nach Anspruch 9, wobei die zweite (41) und die dritte (45) Reflektionsfläche voneinander in der vorgegebenen Richtung um weniger als den Durchmesser des auftreffenden Lichtstrahls beabstandet sind.

11. Optische Abnehmervorrichtung nach Anspruch 9 oder 10, wobei des Weiteren ein Fotodetektor (79) vorhanden ist, der einen von dem Aufzeichnungsmedium (50) reflektierten Lichtstrahl empfängt und nacheinander durch die Objektivlinse (61) und das zusammengesetzte Reflektionsprisma (10) leitet und den empfangenen Lichtstrahl fotoelektrisch umwandelt.

12. Vorrichtung nach einem der Ansprüche 9 bis 11, wobei das Aufzeichnungsmedium (50) eine Struktur hat, in der Daten in einem Aufzeichnungsverfahren der ersten Reflektionsfläche (25) auf dem Aufzeichnungsmedium (50) aufgezeichnet und/oder von ihm wiedergegeben werden.

13. Vorrichtung nach einem der Ansprüche 9 bis 12, wobei wenigstens ein Abschnitt der Objektivlinse (61) an einer Position unter einem Lichtstrahl angeordnet ist, der von der Lichtquelle (51) emittiert wird und auf das zusammengesetzte Reflektionsprisma (10) auftrifft.

14. Vorrichtung nach einem der Ansprüche 9 bis 13, die des Weiteren eine Einrichtung zum Ändern des Lichtweges umfasst, die einen Ausbreitungsweg eines Lichtstrahls ändert und auf einem Lichtweg zwischen der Lichtquelle (51) und dem zusammengesetzten Reflektionsprisma (10) vorhanden ist.

15. Vorrichtung nach Anspruch 14, wobei die Einrichtung zum Ändern des Lichtweges umfasst:

einen polarisierenden Strahlteiler (55), der einen auftreffenden Lichtstrahl entsprechend der Polarisation des auftreffenden Lichtstrahls durchlässt und reflektiert; und

ein Wellenplättchen (57), das die Polarisation des auftreffenden Lichtstrahls ändert.

16. Vorrichtung nach Anspruch 14, wobei die Einrichtung zum Ändern des Lichtweges ein Hologrammelement (85) ist, das einen auftreffenden Lichtstrahl entsprechend einer Auftreffrichtung selektiv durchlässt oder beugt und durchlässt, und die Lichtquelle (51), das Hoigrammelement (85) sowie ein Fotodetektor (79) optisch modularisiert sind.

**Revendications**

1. Prisme composite de type à réflexion (10) comportant une pluralité de prismes (20, 30, 40), comportant un premier prisme (20) et un deuxième prisme (40), dans lequel :

le premier prisme (20) comporte une première surface de transmission (21) et une première surface de réflexion (25) qui sont chacune inclinées par rapport à un premier plan horizontal, de sorte qu'un faisceau lumineux ayant un diamètre donné se déplaçant le long d'un plan horizontal parallèle au premier plan horizontal et venant frapper perpendiculairement la première surface de transmission (21), est réfléchi par la première surface de réflexion (25) de sorte que le faisceau lumineux réfléchi est incliné par rapport au premier plan horizontal et est transmis en direction de celui-ci, et
le deuxième prisme (40) comporte des deuxième (41), troisième (45) et quatrième (49) surfaces de réflexion, le prisme composite étant **caractérisé en ce que** la deuxième surface de réflexion (41) est agencée pour se trouver dans le premier plan horizontal et la troisième surface de réflexion (45) est agencée pour être parallèle à la deuxième surface de réflexion (41) et espacée de celle-ci dans une direction prédéterminée d'une distance inférieure au diamètre donné et **en ce que** la quatrième surface de réflexion (49) forme un angle inférieur à 45 degrés par rapport au premier plan horizontal, le deuxième prisme (40) étant agencé par rapport au premier prisme (20) pour recevoir le faisceau lumineux ayant un diamètre donné réfléchi par la première surface de réflexion (25), de sorte que le faisceau lumineux est réfléchi dans cet ordre par les deuxième (41), troisième (45), et quatrième (49) surfaces de réflexion pour transmettre en fin de compte le faisceau lumineux dans la direction prédéterminée.

2. Prisme composite de type à réflexion (10) selon la revendication 1, dans lequel la quatrième surface de réflexion (49) du deuxième prisme (40) forme un angle de 20° à 40 par rapport au premier plan horizontal.

3. Prisme composite de type à réflexion (10) selon la revendication 1 ou 2, dans lequel le deuxième prisme (40) est un prisme rhomboïde dans lequel les deuxième à quatrième surfaces de réflexion (41, 45, 49) et une surface en vis-à-vis de la quatrième surface de réflexion (49) forment une structure rhomboïde.

4. Prisme composite de type à réflexion (10) selon la revendication 1, 2 ou 3, dans lequel un troisième prisme (30) est agencé entre les premier (20) et deuxième (40) prismes pour amener un faisceau lumineux réfléchi par la première surface de réflexion (25) du premier prisme (20) à se déplacer directement vers le deuxième prisme (40).

5. Prisme composite de type à réflexion (10) selon la revendication 4, dans lequel le troisième prisme (30) est un prisme triangulaire ayant une structure de triangle rectangle.

6. Prisme composite de type à réflexion (10) selon l'une quelconque des revendications 1 à 5, dans lequel le premier prisme (10) est un prisme triangulaire ayant une structure de triangle isocèle conçu pour être incliné d'un angle prédéterminé par rapport au premier plan horizontal.

7. Prisme composite de type à réflexion (10) selon l'une quelconque des revendications 1 à 6, dans lequel les premier (20) et deuxième (40) prismes sont formés et agencés de sorte qu'une réflexion interne totale d'un faisceau lumineux incident apparaît sur les première à troisième surfaces de réflexion (25, 41, 45).

8. Prisme composite de type à réflexion selon l'une quelconque des revendications précédentes, dans lequel la quatrième surface de réflexion (49) du deuxième prisme (40) est une surface de réflexion totale.

**9.** Dispositif de lecture optique, incluant le prisme composite de type à réflexion selon l'une quelconque des revendications précédentes et comportant de plus une source lumineuse (51), un objectif (61) pour former un spot lumineux sur une surface d'enregistrement (50a) d'un milieu d'enregistrement (50) en condensant un faisceau lumineux incident émis par la source lumineuse (51) et un actionneur (65) pour entraîner l'objectif (61) dans des directions de focalisation et/ou de suivi de piste, dans lequel le prisme composite de type à réflexion (10) est agencé pour recevoir le faisceau lumineur incident émis dans une direction horizontale depuis la source lumineuse (51) et transmettre le faisceau lumineux verticalement dans la direction prédéterminée vers l'objectif (61).

**10.** Dispositif de lecture optique selon la revendication 9, dans lequel les deuxième (41) et troisième (45) surfaces de réflexion sont espacées l'une de l'autre dans la direction prédéterminée d'une distance inférieure au diamètre du faisceau lumineux incident.

**11.** Dispositif de lecture optique selon la revendication 9 ou 10, dans lequel il est de plus agencé un photodétecteur (79) pour recevoir un faisceau lumineux refléchi par le milieu d'enregistrement (50) et faire passer séquentiellement à travers l'objectif (61) et le prisme composite de type à réflexion (10) et convertir de manière photoélectrique le faisceau lumineux reçu.

**12.** Dispositif selon l'une quelconque des revendications 9 à 11, dans lequel le milieu d'enregistrement (50) a une structure dans laquelle des données sont enregistrées sur le milieu d'enregistrement (50) et/ou lues depuis celui-ci dans un procédé d'enregistrement de première surface de réflexion (25).

**13.** Dispositif selon l'une quelconque des revendications 9 à 12, dans lequel au moins une partie de l'objectif (61) est positionée à une position inférieure au faisceau lumineux émis par la source lumineuse (51) et frappant le prisme composite de type à réflexion (10).

**14.** Dispositif selon l'une quelconque des revendications 9 à 13, comportant de plus un élément de changement de trajet optique pour changer un trajet de déplacement d'un faisceau lumineux, agencé sur un trajet optique entre la source lumineuse (51) et le prisme composite de type à réflexion (10).

**15.** Dispositif selon la revendication 14, dans lequel l'élément de changement de trajet optique comporte :

   un diviseur de faisceau de polarisation (55) pour transmettre et réfléchir un faisceau lumineux incident conformément à la polarisation du faisceau lumineux incident, et
   une plaque d'onde (57) pour changer la polarisation du faisceau lumineux incident.

**16.** Dispositif selon la revendication 14, dans lequel l'élément de changement de trajet optique est un élément holographique (85) pour transmettre ou diffracter et transmettre de manière sélective un faisceau lumineux incident conformément à une direction d'incidence, et la source lumineuse (51), l'élément holographique (85) et un photodétecteur (79) sont modularisés de manière optique.

# FIG. 1 (PRIOR ART)

# FIG. 2

# FIG. 3

# FIG. 4

# FIG. 5

# FIG. 6

# FIG. 7